# EUROPEAN PATENT SPECIFICATION

(11) **EP 3 816 750 B1**
(45) Date of publication and mention of the grant of the patent: **03.12.2025**
(21) Application number: 19880920.4
(22) Date of filing: 30.10.2019
(51) Int. Cl.: G06F 21/62

(54) **AUTONOMOUS DRIVING VEHICLE SIMULATOR TO WHICH NETWORK PLATFORM IS APPLIED**
AUTONOMER FAHRZEUGSIMULATOR, AUF DEM EINE NETZWERKPLATTFORM AUFGEBRACHT IST
SIMULATEUR DE VÉHICULE À CONDUITE AUTONOME AUQUEL UNE PLATE-FORME DE RÉSEAU EST APPLIQUÉE

(30) Priority: 31.10.2018 KR 20180131990
(43) Date of publication of application: 05.05.2021
(73) Proprietor: Morai, Seoul 06194 (KR)
(72) Inventor: JUNG, Jiwon, Daegu 41025 (KR); HONG, Jun, Icheon-si, Gyeonggi-do 17418 (KR)
(74) Representative: Studio Torta S.p.A.
(86) International application number: PCT/KR2019/014485
(87) International publication number: WO 2020/091421

(56) References cited:
- JP-A- 2006 326 746
- KR-A- 20090 014 195
- KR-A- 20120 072 020
- KR-A- 20140 144 919
- KR-A- 20170 135 537
- XUDONG CHAI ET AL: "Research and Application on Service Oriented Infrastructure for Networkitized M&S", CLUSTER COMPUTING AND THE GRID, 2006. CCGRID 06. SIXTH IEEE INTERNATIONAL SYMPOSIUM ON - SINGAPORE 16-19 MAY 2006, PISCATAWAY, NJ, USA,IEEE, 16 May 2006 (2006-05-16), pages 67, XP032120786, ISBN: 978-0-7695-2585-3, DOI: 10.1109/CCGRID.2006.1630957
- HUSSAIN RASHEED ET AL: "Autonomous Cars: Research Results, Issues, and Future Challenges", IEEE COMMUNICATIONS SURVEYS AND TUTORIALS, 10 September 2018 (2018-09-10), New York, pages 1275 - 1313, XP055875631, Retrieved from the Internet <URL:https://ieeexplore.ieee.org/stampPDF/getPDF.jsp?tp=&arnumber=8457076&ref=aHR0cHM6Ly9pZWVleHBsb3JlLmllZWUub3JnL2RvY3VtZW50Lzg0NTcwNzY=> [retrieved on 20211223], DOI: 10.1109/COMST.2018.2869360
- CHENG JINGPING: "Research on distributed virtual environment based on web", COMPUTER-AIDED INDUSTRIAL DESIGN&CONCEPTUAL DESIGN, 2009. CAID&CD 2009. IEEE 10TH INTERNATIONAL CONFERENCE ON, IEEE, PISCATAWAY, NJ, USA, 26 November 2009 (2009-11-26), pages 1854 - 1858, XP031596810, ISBN: 978-1-4244-5266-8

## Description

### [Technical Field]

The present invention relates to an autonomous vehicle simulator to which a network platform is applied, and more particularly, to autonomous vehicle simulator using a network platform provided to allow a plurality of users to access a server that operates a simulator for verifying a driving algorithm of an autonomous vehicle to verify their algorithms.

### [Background Art]

An autonomous vehicle is a vehicle which performs driving without a driver who directly drives the vehicle. In general, such an autonomous vehicle generally follows a driving route based on 2D/3D map information and is configured to measure surrounding objects in real time during driving and change the driving route if a variable occurs.

The autonomous vehicle is autonomously driven according to a flow of perception, planning, and control. In the case of perception, the autonomous vehicle is configured to recognize a driving environment such as vehicles, pedestrians, obstacles, and the like existing on a road using a measuring means such as a radar, a lidar, a camera, and the like mounted on the vehicle. In the case of planning, the autonomous vehicle is configured to infer a driving situation based on data measured in the perception stage and map information. In the case of control, a control signal for a component of the vehicle may be generated based on values computed and inferred in the planning stage to perform actual control.

Here, as disclosed in Korean Patent Laid-Open Publication No. 10-2018-0086632 ("Device and Method for Determining Behavior of Autonomous Vehicle", published on August 1, 2018) or Korean Patent Laid-Open Publication No. 10-2018-0104947 ("Autonomous Vehicle Control System and Method", published on September 27, 2018), autonomous vehicles have been developed to perform more appropriate control by recognizing and determining larger amount of information minutely. To this end, in the related art, development has been made such that algorithms of respective stages have advanced to derive an accurate decision given many variables.

The developed algorithms undergo a verification process, before being actually applied to autonomous vehicles. In other words, driving may be performed under a virtual reality situation by applying the algorithms to a separate simulator.

However, in the case of the algorithms applied to the simulator, one of each of the following, perception, planning, and control algorithms are collected and an interface of the full algorithm is built, which is then applied to the simulator. Therefore, if only a subset of the entire integrated algorithm is developed, it disadvantageously takes a long time for the entire algorithm to be applied to the simulator. In addition, in order for a developer who developed a subset algorithm to input data into the simulator and run a simulation, the simulation may be performed only through combination with other algorithms allocated within the predetermined virtual environment, and thus performing varied evaluations becomes difficult.
Prior art document XUDONG CHAI ET AL: "Research and Application on Service Oriented Infrastructure for Networkitized M&S", CLUSTER COMPUTING AND THE GRID, 2006. CCGRID 06. SIXTH IEEE INTERNATIONAL SYMPOSIUM ON - SINGAPORE 16-19 MAY 2006, PISCATAWAY, NJ, USA,IEEE, 16 May 2006 (2006-05-16) discloses a service oriented infrastructure for networkitized M&S, namely simulation grid.
Prior art document Hussain Rasheed ET AL: "Autonomous Cars: Research Results, Issues, and Future Challenges", IEEE Communications surveys and tutorials, 10 September 2018 (2018-09-10) discloses a comprehensive review of state-of-the-art results for autonomous car technology.
Prior art document CHENG JINGPING: "Research on distributed virtual environment based on web", COMPUTER-AIDED INDUSTRIAL DESIGN&CONCEPTUAL DESIGN, 2009. CAID&CD 2009. IEEE 10TH INTERNATIONAL CONFERENCE ON, IEEE, PISCATAWAY, NJ, USA, 26 November 2009 (2009-11-26) discloses a synthetic natural environment concerning topography, weather, hydrological geology and sound, and a kind of virtual reality. System model of vehicle simulator and distributed virtual environment architecture are also discussed.

### [Disclosure]

### [Technical Problem]

An object of the present invention is to provide an autonomous vehicle simulator using a network platform in which a plurality of users who access an operation server of a simulator and data for applying one autonomous vehicle to the simulator is divided into a plurality of data sets, so that the plurality of users operate the simulator by sharing mutual data sets, thereby making more diverse evaluations on an algorithm.

### [Technical Solution]

According to an exemplary embodiment of the present invention, an autonomous vehicle simulator system may include: a database storing at least one autonomous vehicle operation data, operation environment data, and user information; a database management system (DBMS) controlling data input to and output from the database; an input module receiving user identification information; a security module assigning access authorization by matching the user identification information received by the input module with the user information in the database; and a simulator operated based on data in the database, wherein one autonomous vehicle data in the database is packaged into a plurality of data sets and each of the plurality of data sets includes at least one data packet.

The autonomous vehicle simulator system may further include: a control module selecting an output of one data packet on one data set, wherein information of a data packet selected from each of the plurality of data sets may be transmitted to the simulator.

One autonomous vehicle data may be packaged into some data sets and other data sets, and when the DBMS receives data packets of some data sets from one user terminal and transmits the corresponding data packets to the simulator, the DBMS may determine whether the other data sets in the database have data packets, and when data packets within the other data sets do exist, the DBMS may transmit the corresponding data packets to the simulator.
one set of autonomous vehicle data contains each of the following datasets: perception, planning and control.

The input module may receive data packet information or usage authority request information of the autonomous vehicle from a user terminal, and when the input module receives the data packet, the DBMS may classify a data set corresponding to the data packet and input the classified data set to the database.

When data packet information is previously input from a first user terminal and stored in the database and another user terminal requests authorization to use the corresponding data packet, the security module may transmit a notification that authority to use the corresponding data packet was granted and that the data packet information was shared to the first user terminal.

The autonomous vehicle simulator system may further include: an output module either displaying information on virtual environment that is being operated in the simulator or transmitting data.

The input module may receive real-world test drive data of the autonomous vehicle and inputs the actual driving data of the autonomous vehicle as operation environment data of the database through the DBMS, and the simulator may receive the autonomous vehicle operation data and operation environment data from the database.

### [Advantageous Effects]

In the autonomous vehicle simulator system according to the various exemplary embodiments of the present invention, a plurality of users input a plurality of data packets to data sets and a plurality of the data sets are collected and transmitted as autonomous vehicle data to the simulator, whereby the plurality of users may mutually share the data packets and operate their own data packets in more various operation algorithms.

Accordingly, the present invention may provide an environment in which more precise algorithms may be developed, and technical advances may be made in cooperation with each other, thereby contributing to the practical use of current autonomous vehicles.

### [Description of Drawings]

FIG. 1 is a block diagram of an autonomous vehicle simulator system of the present invention.
FIGS. 2 and 3 are block diagrams illustrating that a user accesses an autonomous vehicle simulator system according to a first exemplary embodiment of the present invention.
FIG. 4 is a flowchart illustrating operation steps of the autonomous vehicle simulator system according to the first exemplary embodiment of the present invention.
FIGS. 5 and 6 are block diagrams illustrating that a user accesses an autonomous vehicle simulator system according to a second exemplary embodiment of the present invention.
FIG. 7 is a flowchart illustrating operation steps of the autonomous vehicle simulator system according to the second exemplary embodiment of the present invention.
FIG. 8 is a block diagram illustrating that real-world test drive data of an autonomous vehicle is transmitted to an autonomous vehicle simulator system according to a third exemplary embodiment of the present invention.
FIG. 9 is a flowchart illustrating operation steps of the autonomous vehicle simulator system according to the third exemplary embodiment of the present invention.
FIG. 10 is a block diagram illustrating that an autonomous driving vehicle simulator system according to a fourth exemplary embodiment of the present invention operates data received from a plurality of users.
FIG. 11 is a flowchart illustrating operation steps of the autonomous vehicle simulator system according to the fourth exemplary embodiment of the present invention.

### [Best Mode]

Hereinafter, an autonomous vehicle simulator system according to an exemplary embodiment of the present invention will be described in detail with reference to the accompanying drawings. The drawings are provided as examples in order to convey the spirit of the present invention to those skilled in the art. Therefore, the present invention is not limited to the drawings presented hereinafter and may be embodied in other forms. Throughout the specification, the same reference numbers will be used to refer to the same or like components.

If there are no other definitions for technical terms and scientific terms used here, the technical terms and scientific terms have the meanings commonly understood by those skilled in the art to which the present invention pertains, and in the following description and accompanying drawings, descriptions of known functions and components that may unnecessarily obscure the subject matter will be omitted.

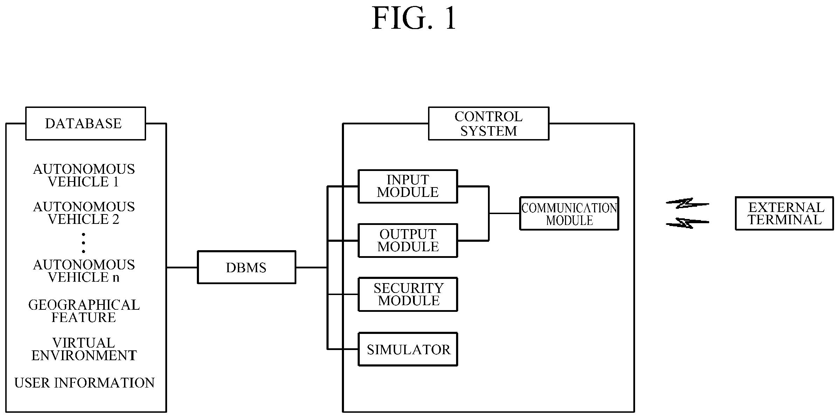

FIG. 1 relates to an autonomous vehicle simulator system according to the present invention and illustrates a system configuration diagram. Referring to FIG. 1, the autonomous vehicle simulator system of the present invention may include a platform including a database in which data input and output is performed through a database management system (DBMS) and a control system including an input/output module, a security module, and a simulator. Here, the control system may further include a communication module to enable the input/output module to perform data communication with an external terminal. Here, data communication may include wired communication or wireless communication and may include both wired and wireless communication to enable data transmission/reception with various external terminals.

The external terminal may include a user terminal including various user groups related to autonomous vehicles, such as an algorithm developer of an autonomous vehicle or a customer who may check that simulation is performed, a display displaying, in real time, simulation information operated in real time in the simulator, an autonomous vehicle actually driven offline, or other platforms.

The DBMS may be configured as a relational database or an object-oriented database and provided such that data in the database is systematically classified. The database may include at least one virtual autonomous vehicle (hereinafter, referred to as an 'autonomous vehicle') data, operation environment data including geographical features and virtual environments, and data related to user information. Here, one autonomous vehicle data may include a meaning of one unit data bundle displayed as one autonomous vehicle on a display through a simulator.

Here, the user information may include information on an authority to access the autonomous vehicle data or user identification information. In addition, if the autonomous vehicle data is provided in plurality, one user may input, edit, and output data for a single autonomous vehicle, or some of the plurality of users may only input and edit data, while others may only output data. Of course, this may be limited to a case where access to data is permitted, and a user whose access to the one autonomous vehicle is denied may not input/output or edit the data. Also, regarding a plurality of autonomous vehicles, as described above, one user may input, edit, and output data, or a plurality of users may have different authorities or may be given authorizations that partially overlap. The authority may be configured such that the security module may match user authentication information received from the user terminal to the user information in the database and transmits a permitted access level to the DBMS.

### <Embodiment 1>

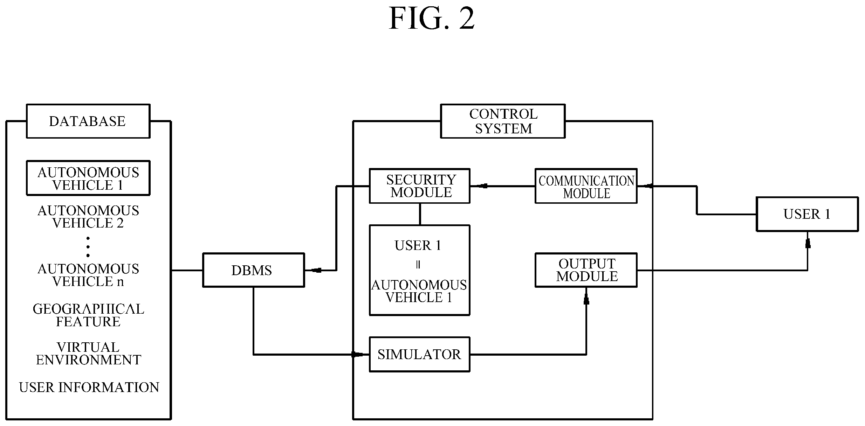

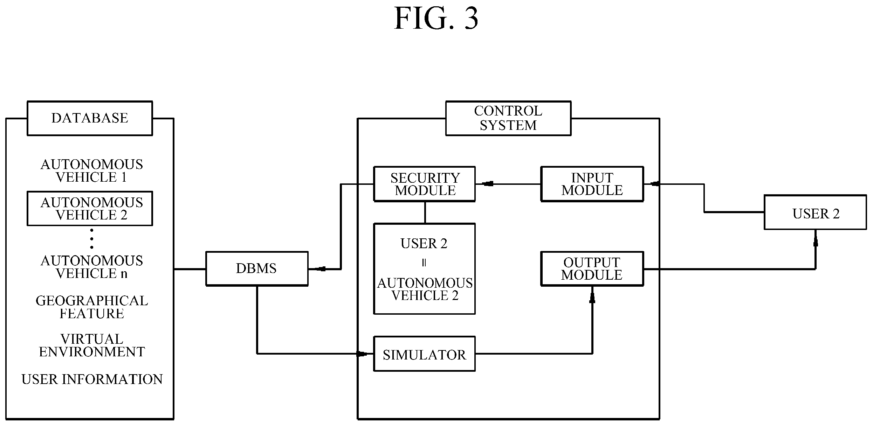

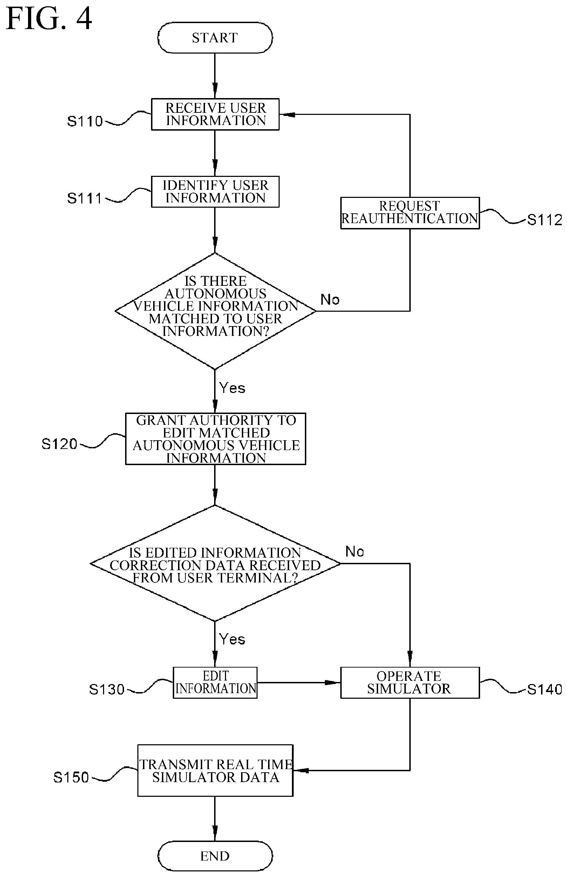

FIGS. 2 to 4 relate to a first exemplary embodiment of an autonomous vehicle simulator system of the present invention, in which FIGS. 2 and 3 are block diagrams illustrating that users access the system and FIG. 4 is a flowchart illustrating operation steps of the system.

First, referring to FIGS. 2 and 3, when user 1 and user 2 access the autonomous vehicle simulator system through their respective user terminals, user information of the user 1 and the user 2 received through the input module may be transmitted to the security module. Here, the security module may be configured to match the received user information to the user information in the database so that the user 1 and the user 2 may be matched to vehicles allowed to access.

When user 1 and user 2 are matched to autonomous vehicle 1 and autonomous vehicle 2, respectively, the user 1 may input/output or edit data for the autonomous vehicle 1, and user 1 may be configured to change data of the autonomous vehicle 1 by transmitting information on input/output or edits through his/her user terminal. In the case of changing the data, the data may be backed up in a history format in the database and restored later, or a plurality of data groups may be configured for one control algorithm and selected by a user.

In addition, the users may transfer the autonomous vehicle information along with the edits of the information on the autonomous vehicle allowed to access to the simulator so that a simulation result may be received. Here, the simulator may be operated in real time or may be operated when requested by an administrator or a user and may be configured to transfer the simulation result to the output module so as to be transmitted to the user when the user applies an algorithm developed by the user. Accordingly, the user may check in real time how the autonomous vehicle is driven under various environments of the simulator from his/her user terminal or a separate display or external device.

Thereafter, referring to FIG. 4, the autonomous vehicle simulator system of the present invention may be operated as follows. First, the present invention may include receiving, by the input module of the autonomous vehicle simulator system (hereinafter, referred to as 'platform'), user information from a user terminal (S110) and identifying user information of the received user information (S111). Here, a control system in the platform may determine whether the user information is proper through a security module and may determine whether there is autonomous vehicle information matched to the user information. In addition, if there is no autonomous vehicle information matched to the user information, requesting re-authentication from the user terminal through an output module and a communication module may be performed (S112).

In addition, if the autonomous vehicle information matched to the user information exists in the database, granting an authority to edit the corresponding autonomous vehicle information to the connected user may be performed.

When edited information data for changing the corresponding autonomous vehicle information is received from the user terminal, editing the corresponding autonomous vehicle data in the database may be performed through the DBMS (S130). In addition, if the edited information data is not received from the user terminal or if edits to the information are made after edited information data is received, the user connected to the user terminal may operate the simulator (S140) and request output information on the simulation operated in real time. Subsequently, when the output information is requested, the platform may transmit simulation data to the user terminal through the output module (S150). Accordingly, the platform of the present invention may be configured to input an algorithm developed by the user to the simulator and to receive real-time simulation information.

### <Embodiment 2>

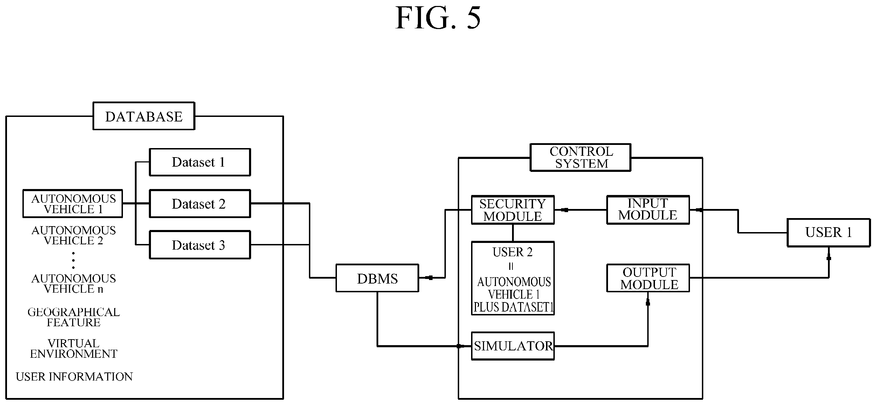

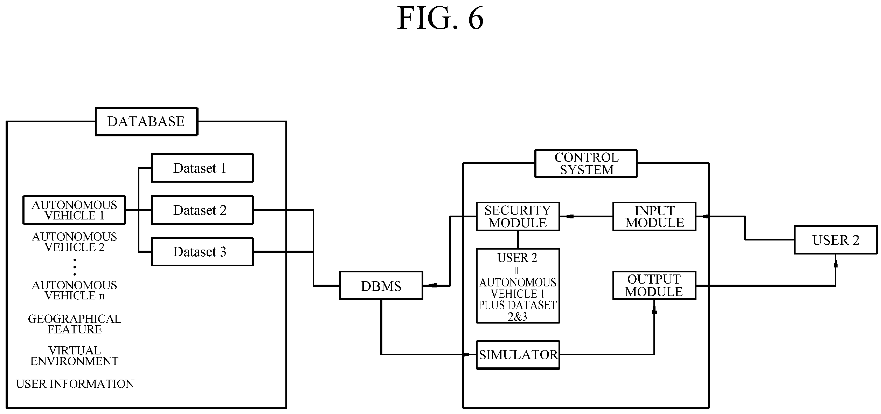

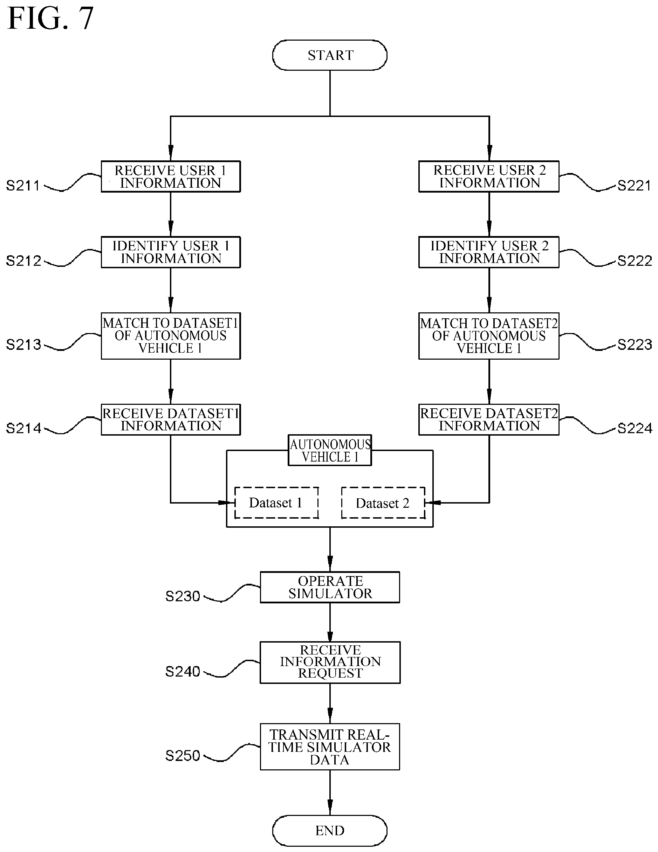

FIGS. 5 to 7 relate to a second exemplary embodiment of an autonomous vehicle simulator system of the present invention, in which FIGS. 5 and 6 are block diagrams illustrating that users access the system and FIG. 7 is a flowchart illustrating operation steps of the system.

First, referring to FIGS. 5 and 6, when user 1 and user 2 access the autonomous vehicle simulator system through their respective user terminals, user information of user 1 and user 2 received through the input module may be transmitted to the security module. Also, the security module may be configured to match the received user information to the user information in the database so that the user 1 and the user 2 may be matched to vehicles they are allowed to access.

Here, one autonomous vehicle in the database may include a plurality of data sets, and when the plurality of data sets is transmitted to the simulator through the DBMS, they may appear as one autonomous vehicle on a display on which the plurality of data sets are output. In addition, the plurality of data sets may be configured to include a perception data set, a planning data set, and a control data set, so that a connected user may be allowed to access one or more data sets among the plurality of data sets.

In detail, when the autonomous vehicle is divided into a perception data set (Data set 1), a planning data set (Data set 2), and a control data set (Data set 3), the user 1 connected to the platform may access the perception data set and the user 2 may access the planning data set and the control data set.

Also, when the user 1 and user 2 edit an algorithm in the corresponding data set or input a new algorithm and the data sets are collected and input to the simulator through the DBMS, the user 1 and the user 2 may be configured to verify algorithms developed by the user 1 and the user 2, respectively. Alternatively, if the planning data set and the control data set in the database are previously input in a situation where the user 1 inputs the perception data set, the user 1 may transmit his/her perception data set together with the previously input data sets to the simulator, so that verification may be made even without a separate integration process or possession of other data sets.

Next, referring to FIG. 7, the autonomous vehicle simulator system of the present invention may be operated as follows.

First, the platform of the present invention may include receiving information from the user 1 (S211) and identifying the received information of user 1 (S212). In addition, the platform may include matching information of user 1 to data set 1 in one autonomous vehicle (S213) and receiving information related to the matched data set 1 from the user terminal of the user 1 (S214). Accordingly, data for the data set 1 of the autonomous vehicle in the database of the present invention may be changed through the DBMS.

In addition, the platform of the present invention may include receiving information from user 2 (S221) and identifying the received information of the user 2 (S222). In addition, the platform of the present invention may include matching the information of user 2 to the data set 2 in one autonomous vehicle (S213) and receiving information related to the matched data set 2 from a user terminal of the user 2 (S224). Accordingly, data for data set 2 of the autonomous vehicle in the database of the present invention may be changed through the DBMS.

In a state where the autonomous vehicle 1 is assumed to be divided into the data set 1 and the data set 2, when the data set 1 and the data set 2 are input to the autonomous vehicle 1 through the above process, the information of the autonomous vehicle 1 may be transmitted from the database to the simulator to operate the simulator (S230).

Also, when an information request for a simulation result from the user 1 or the user 2 is received by the input module, the platform of the present invention may transmit output result data of the real-time simulator to the user terminal of the user who has requested the information (S250).

### <Embodiment 3>

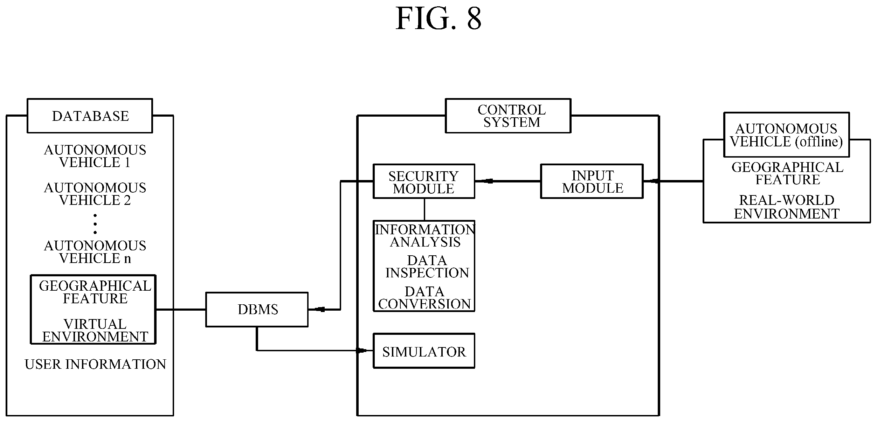

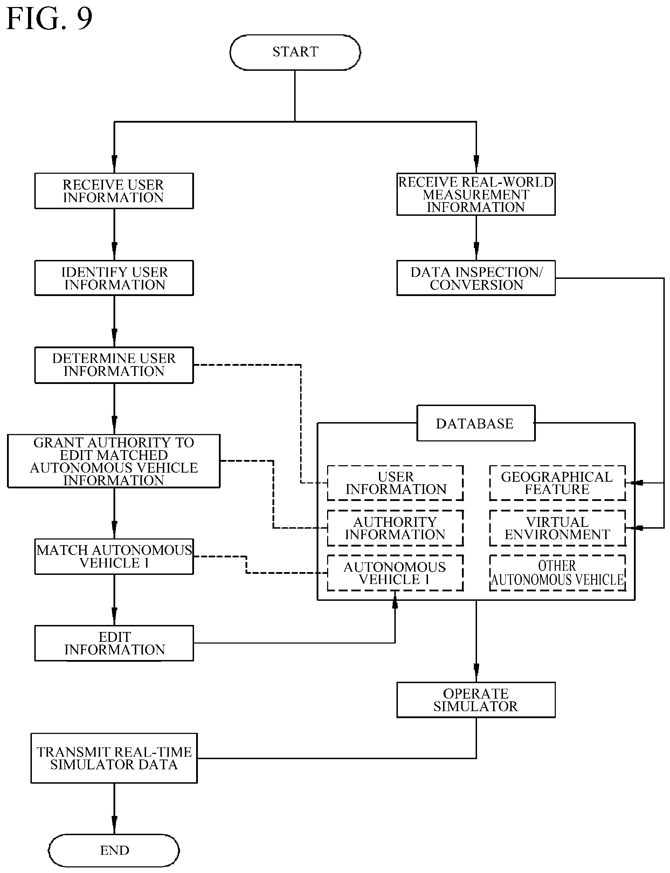

FIGS. 8 and 9 relate to a third exemplary embodiment of an autonomous vehicle simulator system of the present invention, in which FIG. 8 is a block diagram illustrating that real-world test drive data is transmitted to a system and FIG. 9 is a flowchart illustrating operation steps of the system.

Referring first to FIG. 8, the platform of the present invention may be configured to receive information on geographic features and a real-world environment measured during driving from a database of an autonomous vehicle which has actually driven on a road. Here, real-world test drive data of the autonomous vehicle may be received through an input module of a control system, and information analysis, data inspection, and data conversion processes may be performed in the security module. In addition, when the series of processes are performed in the security module, operation environment data may be input to the database through a DBMS, and the operation environment data may be classified and stored as the geographic features and the virtual environment. Furthermore, an unexpected event that occurs during real-world driving may also be stored and may be configured to be displayed as a virtual environment encountered when autonomous vehicles of a virtual reality drive when the simulator is operated.

Next, referring to FIG. 9, the autonomous vehicle simulator system of the present invention may be operated as follows.

First, the platform of the present invention may include receiving information from a user (S311) and identifying the received user's information (S312). The platform of the present invention may compare the user's information with the user information in the database to determine information of an autonomous vehicle that the user may access (S313), and the security module may grant an authority to edit the autonomous vehicle information matched to the corresponding user based on authority information in the database (S314). Here, the authority information may be previously configured, in relation to user information, as to which degree the corresponding user is allowed to control data such as inputting, editing, or outputting data or may record data regarding a user being shared or granted authorization to another user's data.

In addition, the platform of the present invention may include matching the user and autonomous vehicle 1 (S315), and when a data change request for the autonomous vehicle 1 is received from the user, the platform of the present invention may change data of the autonomous vehicle 1 in the database through the DBMS.

In addition, the platform of the present invention may include a stage (S321) for receiving real-world measurement information from the autonomous vehicle which has performed a real-world drive. Here, the real-world measurement information may be transmitted by the autonomous vehicle, a user terminal, transferred through a server, or the like, but in the present invention, the subject that transmits the real-world measurement information is not limited as long as it receives information of the real-world environment in which real-world driving has been performed and geographical feature information.

When the real-world measurement information is received through the input module of the platform, data inspection and conversion may be made in the security module (S322) and then stored in the geographical features and virtual environment data of the database.

When the information of the autonomous vehicle, the geographical features, and the virtual environment is input through the above process, the user may verify his/her own algorithm through the geographical features and the virtual environment based on real-world measurement information, and it may also be provided through the previously input geographical features and virtual environment. Accordingly, it is possible to verify the algorithm configuring the autonomous vehicle in more diverse environments, thereby increasing reliability when applied to an actual autonomous vehicle.

Also, upon receiving the user's request, the platform of the present invention may be configured to operate the simulator (S330) and transmit real-time simulator data, which is output information, to the user through the output module (S340).

### <Embodiment 4>

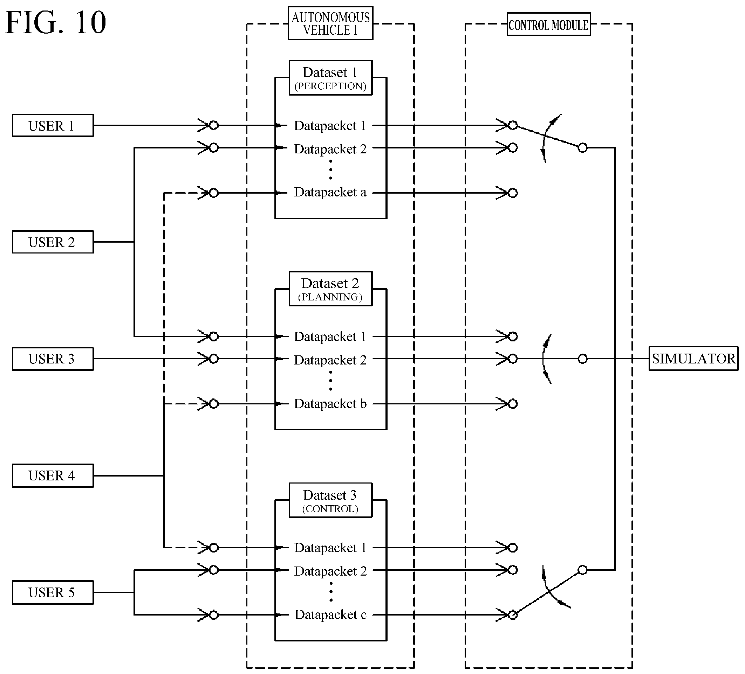

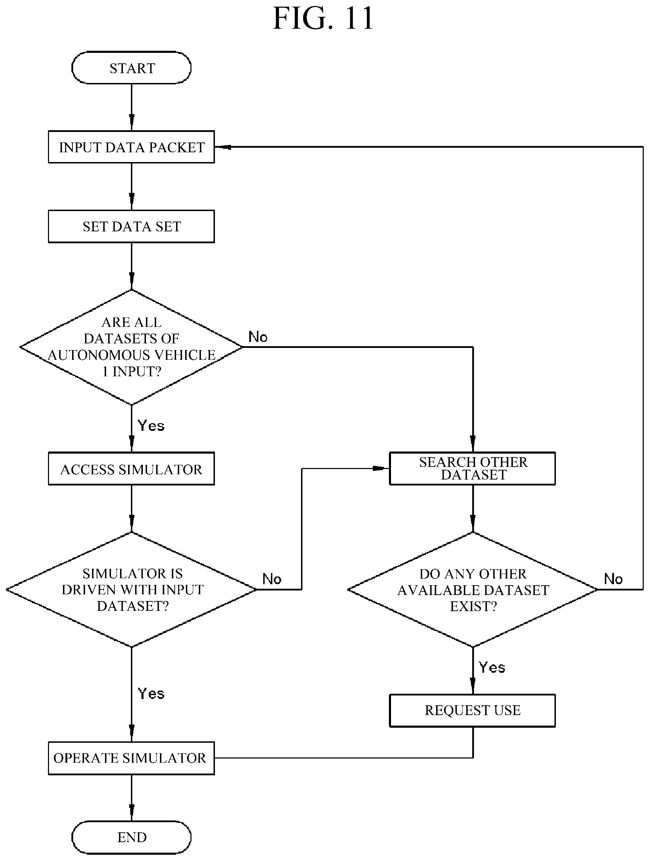

FIGS. 10 and 11 relate to a fourth exemplary embodiment of the autonomous vehicle simulator system of the present invention, in which FIG. 10 is a block diagram illustrating that a system operates data received from a plurality of users and FIG. 11 is a flowchart illustrating operation steps of the system.

First, referring to FIG. 10, the autonomous vehicle 1 in the platform may include a plurality of data sets as described above, and one data set may also include one or a plurality of data packets. In FIG. 10, data set 1 includes data packet 1 to data packet a, data set 2 includes data packet 1 to data packet b, and data set 3 includes data packet 1 to data packet c. Here, a, b, and c may consist of natural numbers greater than 3.

Here, a plurality of users may input their own algorithm to the autonomous vehicle 1, and this will be described in detail as follows.

User 1 may input an algorithm for data set 1, and for this, data packet 1 input by user 1 may be stored in data set 1 in the database. In order for the user 1 to verify his/her algorithm in the simulator, the user 1 may transmit his/her own data packet 1 and the shared data packets stored in data set 2 and data set 3, to receive real-time simulation result information.

User 2 may input an algorithm for data set 1 and data set 2, and for this, data packet 2 may be stored in data set 1 and the data set 1 may be stored in data set 2. Here, in order to verify the algorithm for his/her data set 1 and data set 2, the user 2 may share a data packet previously input to data set 3, and if an owner of a matched data packet permits, the user 2 may transmit the shared data packet to the simulator and receive real-time simulation result information.

User 3 may input an algorithm for data set 2, and for this, data packet 2 input by the user 3 may be stored in data set 2 in the database. In order for the user 3 to verify his/her algorithm in the simulator, the user 3 may transmit his/her own data packet 2 and shared data packets stored in data set 1 and data set 3 to receive real-time simulation result information.

In addition, user 4 may input each of data set 1, data set 2, and data set 3, and accordingly, the user 4 may be given an authority to access data for a data packet a of data set 1, a data packet b of the data set 2, and a data packet 1 of the data set 3. Here, the user 4 may operate the simulator with the data sets input by himself/herself, and thus, the user 4 may use the data sets as is or may share data packets input by other users, rather than his/her own data packets, transmit the shared data packets to the simulator, and receive a real-time simulation output result.

User 5 may input two algorithms for data set 3, and accordingly, data packet 2 and data packet c may be stored in data set 3. Also, the corresponding user may select one of his/her own data packets 2 or c, be shared or be granted an authority to use data packets of the data set 1 and data set 2 from an owner of data packets, transmit them to the simulator, and check the simulation result for his/her algorithm.

The plurality of data sets here is not limited to three and may include two or more data sets. In the case of three or more data sets, the data sets may include perception, planning, and control as described above. In addition, the data sets in this exemplary embodiment represent a classification system configured for driving on the autonomous vehicle simulator, and an algorithm for operating an autonomous vehicle on the simulator is represented by a data packet.

The platform of the present invention may further include a control module to control which data packet is to be selected for each of a plurality of data sets. Here, the control module may be provided to determine whether the security module or the user may access the corresponding packet, and thereafter, the control module may transmit information of the corresponding data packet to the simulator only when appropriate. Through this, a plurality of users may be configured to more clearly verify their algorithms by sharing the data packets input by the plurality of users or by interworking with counterpart data packets.

Next, referring to FIG. 11, the autonomous vehicle simulator system of the present invention may be operated as follows.

The platform of the present invention may include receiving a data packet from a user terminal of a user (S411) and determining which data set the received data packet is (S412). In addition, the platform of the present invention may determine whether a data packet transmitted by a user includes all data sets for one autonomous vehicle.

Here, if the data packet transmitted by the user includes all the data sets for one autonomous vehicle, the platform may transmit information on whether to operate the simulator with the corresponding data sets to the user (S420), and may operate the simulator when information indicating that driving is to be performed only with input information is received (S450).

In addition, if the data packet transmitted by the user does not include all the data sets for one autonomous vehicle, the platform may transmit data packets stored on other data sets or data packets that the user may access to the user (S430). In addition, if data packets of other data sets exist, the user may select a data packet he/she wants to use. If the user does not have an authority for the corresponding data packet, the user may request use of the corresponding data packet from an owner of the data packet. If the owner approves use of the corresponding packet according to the request, the user may transmit information to the simulator through a combination of the data packet of one data set input by the user and data packets of other data sets of a different user to operate the simulator (S450).

In addition, as an exemplary embodiment of a case where the present invention includes a plurality of data sets including perception, planning, and control, the data sets may be divided as follows. The perception data set may be configured as an algorithm that recognizes a location of an autonomous vehicle A on a preset map, a distance to another autonomous vehicle or a pedestrian, a lane of a road, status information of another autonomous vehicle, and the like, through a virtual sensor when the one autonomous vehicle A is tested in an operation environment of a simulator including a virtual environment and geographical features. The planning data set may be configured as an algorithm that calculates a speed, a steering angle, and the like through planning between various identified variables and given control values (average speed, driving lane, maximum speed, route, etc.). The control data set may be configured as an algorithm that applies the previously calculated speed or steering angle to a physical engine in a simulation or may be configured as data input for the control values. Here, when one data packet is input to the perception data set of one autonomous vehicle A, the corresponding data packet may be shared so as to be selected by another autonomous vehicle B or C. And, if the system has only an authority to input the control values of the control data set for one user ID and receive only a simulation result, a basis for facilitating technology transactions and allowing for cooperative development may be advantageously prepared.

Further, in case where a simulation is performed based on real-world measurement data, the input module may receive an real-world 3D map, and an external user may input an algorithm that extracts a depth image, an RGB image, a segment, and the like for the corresponding 3D map and processes the same to perform a test. Also, an algorithm that obtains a projection matrix for an object measured by an actual lidar and camera and generates a point cloud through homography may be configured to be input. Based on this, the present invention may receive real-world measurement data of an autonomous vehicle and use the same as an operation environment.

Although the exemplary embodiments of the present invention have been illustrated and described hereinabove, the present invention is not limited to the above-mentioned specific exemplary embodiments, but may be variously modified by those skilled in the art to which the present invention pertains without departing from the scope of the present invention as disclosed in the accompanying claims. These modifications should also be understood to fall within the scope of the present invention.

## Claims

1. An autonomous vehicle simulator system for verifying a driving algorithm of an autonomous vehicle, the autonomous vehicle simulator system comprising:
a database storing at least one autonomous vehicle operation data, operation environment data, and user information of a plurality of users;
a database management system, DBMS, controlling data input to and output from the database;
an input module receiving user identification information;
a security module assigning access authorization by matching the user identification information received by the input module to the user information in the database;
a simulator operated based on data in the database, wherein one autonomous vehicle data in the database is packaged into a plurality of data sets and each of the plurality of data sets includes at least one data packet, the simulator being configured to receive the driving algorithm for at least one of the data sets and from at least one of the users and generate real-time simulation result information indicative of the verification of the driving algorithm in the simulator; and
a control module selecting an output of one data packet on one data set, wherein information of a data packet selected from each of the plurality of data sets is transmitted to the simulator.

2. The autonomous vehicle simulator system of claim 1, wherein one autonomous vehicle data is packaged into some data sets and other data sets, and when the DBMS receives data packets of some data sets from one user terminal and transmits the corresponding data packets to the simulator, the DBMS determines whether the other data sets in the database have data packets, and when data packets within the other data sets do exist, the DBMS transmits the corresponding data packets to the simulator.

3. The autonomous vehicle simulator system of claim 1, wherein the one autonomous vehicle data comprises a data set of each of perception, planning, and control data sets.

4. The autonomous vehicle simulator system of claim 1, wherein the input module receives data packet information or usage authority request information of the autonomous vehicle from a user terminal, and when the input module receives the data packet, the DBMS classifies a data set corresponding to the data packet and inputs the classified data set to the database.

5. The autonomous vehicle simulator system of claim 4, wherein, when data packet information is previously input from a first user terminal and stored in the database and another user terminal requests authorization to use the corresponding data packet, the security module transmits a notification on the authority to use the corresponding data packet and data packet sharing information to the first user terminal.

6. The autonomous vehicle simulator system of claim 1, further comprising:
an output module either displaying information on virtual environment that is being operated in the simulator or transmitting data.

7. The autonomous vehicle simulator system of claim 1, wherein the input module receives real-world test drive data of the autonomous vehicle and inputs the real-world test drive data of the autonomous vehicle as operation environment data of the database through the DBMS, and the simulator receives the autonomous vehicle operation data and operation environment data from the database.

## Patentansprüche

1. Simulatorsystem für ein autonomes Fahrzeug zum Verifizieren eines Fahralgorithmus eines autonomen Fahrzeugs, wobei das Simulatorsystem für ein autonomes Fahrzeug Folgendes umfasst:
eine Datenbank, die mindestens Betriebsdaten über ein autonomes Fahrzeug, Betriebsumgebungsdaten und Benutzerinformationen einer Vielzahl von Benutzern speichert;
ein Datenbankmanagementsystem (DBMS), das die Dateneingabe in die und die Datenausgabe aus der Datenbank steuert;
ein Eingabemodul, das Benutzeridentifikationsinformationen empfängt;
ein Sicherheitsmodul, das eine Zugriffsberechtigung zuweist, indem die von dem Eingabemodul empfangenen Benutzeridentifikationsinformationen mit den Benutzerinformationen in der Datenbank abgeglichen werden;
einen Simulator, der auf Grundlage von Daten in der Datenbank betrieben wird, wobei Daten über ein autonomes Fahrzeug in der Datenbank in eine Vielzahl von Datensätzen verpackt werden und jeder der Vielzahl von Datensätzen mindestens ein Datenpaket beinhaltet, wobei der Simulator dazu konfiguriert ist, den Fahralgorithmus für mindestens einen der Datensätze und von mindestens einem der Benutzer zu empfangen und Echtzeitsimulationsergebnisinformationen zu erzeugen, die indikativ für die Verifizierung des Fahralgorithmus in dem Simulator sind; und
ein Steuermodul, das eine Ausgabe eines Datenpakets auf einem Datensatz auswählt, wobei Informationen eines Datenpakets, das aus jedem der Vielzahl von Datensätzen ausgewählt ist, an den Simulator übertragen wird.

2. Simulatorsystem für ein autonomes Fahrzeug nach Anspruch 1, wobei die Daten über ein autonomes Fahrzeug in einige Datensätze und andere Datensätze verpackt werden, und wenn das DBMS Datenpakete einiger Datensätze von einem Benutzerendgerät empfängt und die entsprechenden Datenpakete an den Simulator überträgt, das DBMS bestimmt, ob die anderen Datensätze in der Datenbank Datenpakete aufweisen, und wenn Datenpakete innerhalb der anderen Datensätze vorhanden sind, überträgt das DBMS die entsprechenden Datenpakete an den Simulator.

3. Simulatorsystem für ein autonomes Fahrzeug nach Anspruch 1, wobei die einen Daten über ein autonomes Fahrzeug einen Datensatz von jedem von Wahrnehmungs-, Planungs- und Steuerungsdatensätzen umfassen.

4. Simulatorsystem für ein autonomes Fahrzeug nach Anspruch 1, wobei das Eingabemodul Datenpaketinformationen oder Nutzungsgenehmigungsanforderungsinformationen des autonomen Fahrzeugs von einem Benutzerendgerät empfängt und, wenn das Eingabemodul das Datenpaket empfängt, klassifiziert das DBMS einen Datensatz, der dem Datenpaket entspricht, und gibt den klassifizierten Datensatz in die Datenbank ein.

5. Simulatorsystem für ein autonomes Fahrzeug nach Anspruch 4, wobei, wenn Datenpaketinformationen zuvor von einem ersten Benutzerendgerät eingegeben und in der Datenbank gespeichert werden und ein anderes Benutzerendgerät eine Berechtigung zur Verwendung des entsprechenden Datenpakets anfordert, das Sicherheitsmodul eine Benachrichtigung über die Genehmigung zur Verwendung des entsprechenden Datenpakets und der Datenpaketfreigabeinformationen an das erste Benutzerendgerät überträgt.

6. Simulatorsystem für ein autonomes Fahrzeug nach Anspruch 1, ferner umfassend:
ein Ausgabemodul, das entweder Informationen über die virtuelle Umgebung anzeigt, die im Simulator betrieben wird, oder Daten überträgt.

7. Simulatorsystem für ein autonomes Fahrzeug nach Anspruch 1, wobei das Eingabemodul reale Testfahrdaten des autonomen Fahrzeugs empfängt und die realen Testfahrdaten des autonomen Fahrzeugs als Betriebsumgebungsdaten der Datenbank über das DBMS eingibt und der Simulator die Betriebsdaten über ein autonomes Fahrzeug und Betriebsumgebungsdaten von der Datenbank empfängt.

## Revendications

1. Système de simulateur de véhicule autonome pour la vérification d'un algorithme de conduite d'un véhicule autonome, le système de simulateur de véhicule autonome comprenant :
une base de données stockant au moins des données d'exploitation d'un véhicule autonome, des données d'environnement d'exploitation et des informations d'utilisateur d'une pluralité d'utilisateurs ;
un système de gestion de base de données, DBMS, qui commande l'entrée de données dans la base de données et la sortie de données de celle-ci ;
un module d'entrée qui reçoit des informations d'identification d'utilisateur ;
un module de sécurité qui attribue une autorisation d'accès par la mise en concordance des informations d'identification d'utilisateur reçues par le module d'entrée avec les informations d'utilisateur dans la base de données ;
un simulateur exploité sur la base de données dans la base de données, dans lequel des données d'un véhicule autonome dans la base de données sont regroupées en une pluralité d'ensembles de données et chacun de la pluralité d'ensembles de données inclut au moins un paquet de données, le simulateur étant configuré pour recevoir l'algorithme de conduite pour au moins l'un des ensembles de données et en provenance d'au moins l'un des utilisateurs et générer des informations de résultat de simulation en temps réel indicatives de la vérification de l'algorithme de conduite dans le simulateur ; et
un module de commande qui sélectionne une sortie d'un paquet de données sur un ensemble de données, dans lequel des informations d'un paquet de données sélectionné parmi chacun de la pluralité d'ensembles de données sont émises vers le simulateur.

2. Système de simulateur de véhicule autonome selon la revendication 1, dans lequel des données d'un véhicule autonome sont regroupées en certains ensembles de données et d'autres ensembles de données, et lorsque le DBMS reçoit des paquets de données de certains ensembles de données en provenance d'un terminal utilisateur et émet les paquets de données correspondants vers le simulateur, le DBMS détermine si les autres ensembles de données dans la base de données possèdent des paquets de données, et lorsque des paquets de données au sein des autres ensembles de données existent, le DBMS émet les paquets de données correspondants vers le simulateur.

3. Système de simulateur de véhicule autonome selon la revendication 1, dans lequel les données d'un véhicule autonome comprennent un ensemble de données de chacun parmi des ensembles de données de perception, de planification et de commande.

4. Système de simulateur de véhicule autonome selon la revendication 1, dans lequel le module d'entrée reçoit des informations de paquet de données ou des informations de requête d'autorité d'utilisation du véhicule autonome en provenance d'un terminal utilisateur, et lorsque le module d'entrée reçoit le paquet de données, le DBMS classe un ensemble de données correspondant au paquet de données et entre l'ensemble de données classé dans la base de données.

5. Système de simulateur de véhicule autonome selon la revendication 4, dans lequel, lorsque des informations de paquet de données sont précédemment entrées par un premier terminal utilisateur et stockées dans la base de données et un autre terminal utilisateur requiert une autorisation d'utiliser le paquet de données correspondant, le module de sécurité émet une notification sur l'autorité d'utiliser le paquet de données correspondant et des informations de partage de paquet de données vers le premier terminal utilisateur.

6. Système de simulateur de véhicule autonome selon la revendication 1, comprenant en outre :
un module de sortie qui soit affiche des informations sur un environnement virtuel qui est en cours d'exploitation dans le simulateur, soit émet des données.

7. Système de simulateur de véhicule autonome selon la revendication 1, dans lequel le module d'entrée reçoit des données de conduite d'essai en conditions réelles du véhicule autonome et entre les données de conduite d'essai en conditions réelles du véhicule autonome en tant que données d'environnement d'exploitation de la base de données par l'intermédiaire du DBMS, et le simulateur reçoit les données d'exploitation de véhicule autonome et des données d'environnement d'exploitation en provenance de la base de données.
